# EUROPEAN PATENT SPECIFICATION

(11) **EP 4 344 517 B1**
(45) Date of publication and mention of the grant of the patent: **11.11.2026**
(21) Application number: 22922755.8
(22) Date of filing: 28.01.2022
(51) Int. Cl.: H04L 5/00, H04L 27/26, H04L 25/02

(54) **SYSTEMS AND METHODS FOR DMRS PORT CONFIGURATION AND INDICATION**
SYSTEME UND VERFAHREN ZUR DMRS-PORT-KONFIGURATION UND -ANZEIGE
SYSTÈMES ET PROCÉDÉS DE CONFIGURATION ET D'INDICATION DE PORT DE SIGNAL DE RÉFÉRENCE DE DÉMODULATION

(43) Date of publication of application: 03.04.2024
(73) Proprietor: ZTE Corporation, Shenzhen, Guangdong 518057 (CN)
(72) Inventor: MEI, Meng, Shenzhen, Guangdong 518057 (CN); JIANG, Chuangxin, Shenzhen, Guangdong 518057 (CN); GAO, Bo, Shenzhen, Guangdong 518057 (CN); LU, Zhaohua, Shenzhen, Guangdong 518057 (CN); ZHANG, Shujuan, Shenzhen, Guangdong 518057 (CN); YAO, Ke, Shenzhen, Guangdong 518057 (CN)
(74) Representative: Vossius & Partner Patentanwälte Rechtsanwälte mbB
(86) International application number: PCT/CN2022/074465
(87) International publication number: WO 2023/141910

(56) References cited:
- CN-A- 107 431 682
- CN-A- 111 052 662
- US-A1- 2018 026 684
- US-A1- 2020 177 358
- US-A1- 2021 320 772
- ITL: "Considerations on DMRS pattern for NR", vol. RAN WG1, no. Hangzhou, China; 20170515 - 20170519, 14 May 2017 (2017-05-14), XP051273514, Retrieved from the Internet <URL:http://www.3gpp.org/ftp/Meetings_3GPP_SYNC/RAN1/Docs/> [retrieved on 20170514]
- ITL: "Considerations on DMRS pattern for NR", 3GPP TSG RAN WG1 MEETING #89 R1-1708321, 6 May 2017 (2017-05-06), XP051262361
- ZTE: "Further analysis for OCC mapping", 3GPP TSG RAN WG1 MEETING #62 R1-104553, 18 August 2010 (2010-08-18), XP050450106

## Description

### TECHNICAL FIELD

The disclosure relates generally to wireless communications, including but not limited to systems and methods for DMRS port configuration and indication.

### BACKGROUND

The standardization organization Third Generation Partnership Project (3GPP) is currently in the process of specifying a new Radio Interface called 5G New Radio (5G NR) as well as a Next Generation Packet Core Network (NG-CN or NGC). The 5G NR will have three main components: a 5G Access Network (5G-AN), a 5G Core Network (5GC), and a User Equipment (UE). In order to facilitate the enablement of different data services and requirements, the elements of the 5GC, also called Network Functions, have been simplified with some of them being software based so that they could be adapted according to need.

US 2021 /320772 A1, US 2018/026684 A1 and 3GPP Draft R1-1708321 are related prior art documents.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
FIG. 1 illustrates an example cellular communication network in which techniques disclosed herein may be implemented, in accordance with an embodiment of the present disclosure;
FIG. 2 illustrates a block diagram of an example base station and a user equipment device, in accordance with some embodiments of the present disclosure;
FIG. 3 illustrates a block diagram of an example of DMRS type-2 with one front loaded DMRS symbol, in accordance with some embodiments of the present disclosure;
FIG. 4 illustrates a block diagram of an example of DMRS type-2 with two front loaded DMRS symbols, in accordance with some embodiments of the present disclosure;
FIG. 5 illustrates a block diagram of an example of DMRS type-2 with one front loaded and two additional DMRS symbols, in accordance with some embodiments of the present disclosure;
FIG. 6 illustrates a block diagram of an example of DMRS CDM groups with four DMRS ports in one CDM group, in accordance with some embodiments of the present disclosure;
FIG. 7 illustrates a block diagram of an example of DMRS CDM groups with four DMRS ports on four continuous REs in one CDM group, in accordance with some embodiments of the present disclosure;
FIG. 8 illustrates a block diagram of an example of DMRS CDM groups with 4 DMRS ports in each CDM group for DMRs type-1, in accordance with some embodiments of the present disclosure;
FIG. 9 illustrates a block diagram of an example of DMRS CDM groups with 4 DMRS ports in one CDM group in the time domain, in accordance with some embodiments of the present disclosure;
FIG. 10 illustrates a block diagram of an example of 4-symbol DMRS in one CDM group, in accordance with some embodiments of the present disclosure;
FIG. 11 illustrates an example of TCI states in MAC CE, in accordance with some embodiments of the present disclosure;
FIG. 12 illustrates an example of an indication of DMRS port with OCC length 4 or 2, in accordance with some embodiments of the present disclosure;
FIG. 13 illustrates a block diagram of an example of TD-OCC on non-continuous OFDM symbols, in accordance with some embodiments of the present disclosure;
FIG. 14 illustrates a block diagram of an example of a single symbol DMRS with TD-OCC in continuous slots, in accordance with some embodiments of the present disclosure; and
FIG. 15 illustrates a flow diagram of an example method for DMRS port configuration and indication, in accordance with an embodiment of the present disclosure.

### DETAILED DESCRIPTION

### 1. Mobile Communication Technology and Environment

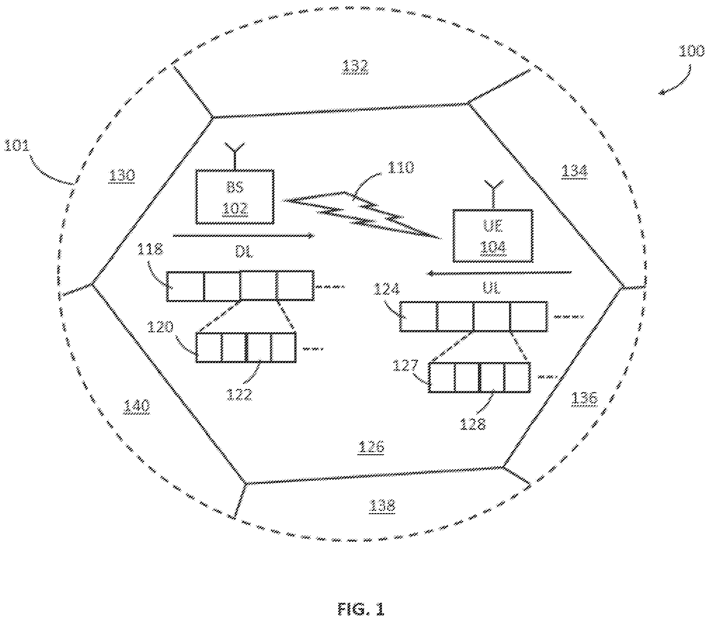

FIG. 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102"; also referred to as wireless communication node) and a user equipment device 104 (hereinafter "UE 104"; also referred to as wireless communication device) that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

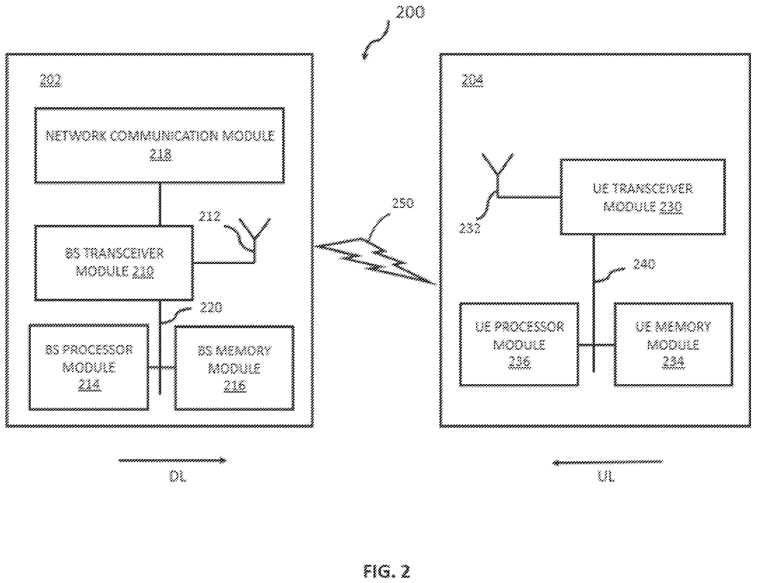

FIG. 2 illustrates a block diagram of an example wireless communication system 200 for transmitting and receiving wireless communication signals (e.g., OFDM/OFDMA signals) in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 may be coordinated in time such that the uplink receiver circuitry is coupled to the uplink antenna 232 for reception of transmissions over the wireless transmission link 250 at the same time that the downlink transmitter is coupled to the downlink antenna 212. Conversely, the operations of the two transceivers 210 and 230 may be coordinated in time such that the downlink receiver is coupled to the downlink antenna 212 for reception of transmissions over the wireless transmission link 250 at the same time that the uplink transmitter is coupled to the uplink antenna 232. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The Open Systems Interconnection (OSI) Model (referred to herein as, "open system interconnection model") is a conceptual and logical layout that defines network communication used by systems (e.g., wireless communication device, wireless communication node) open to interconnection and communication with other systems. The model is broken into seven subcomponents, or layers, each of which represents a conceptual collection of services provided to the layers above and below it. The OSI Model also defines a logical network and effectively describes computer packet transfer by using different layer protocols. The OSI Model may also be referred to as the seven-layer OSI Model or the seven-layer model. In some embodiments, a first layer may be a physical layer. In some embodiments, a second layer may be a Medium Access Control (MAC) layer. In some embodiments, a third layer may be a Radio Link Control (RLC) layer. In some embodiments, a fourth layer may be a Packet Data Convergence Protocol (PDCP) layer. In some embodiments, a fifth layer may be a Radio Resource Control (RRC) layer. In some embodiments, a sixth layer may be a Non Access Stratum (NAS) layer or an Internet Protocol (IP) layer, and the seventh layer being the other layer.

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

### 2. Systems and Methods for DMRS Port Configuration and Indication

In certain systems (e.g., 5G new radio (NR), Next Generation (NG) systems, 3GPP systems, and/or other systems), only 8 and/or 12 demodulation reference signal (DMRS) ports may be supported. With 8 or 12 DMRS ports, a limited number of resource elements (REs) (e.g., number of REs may be the same as the number of DMRS ports) may be communicated between the BS 102 and the UE 104 at a particular time. The systems and methods of the technical features discussed herein can support more than 8 or 12 DMRS ports (e.g., 24 ports) for communication (e.g., uplink and/or downlink communication) between the BS 102 and the UE 104. The systems and methods can include new DMRS pattern(s) that can be implemented/designed/utilized/configured to support the uplink and downlink transmission via the various ports, and the DMRS ports can be indicated/provided to the UE 104. By using the new DMRS pattern(s), and indicating the DMRS ports to the UE 104 additional (or more) DMRS ports can be utilized, thereby allowing/enabling the BS 102 to communicate a greater amount of REs with the UE 104 at a specific time, improving the bandwidth, and/or reducing latency by increasing resources communicated at a time.

In certain systems, artificial intelligence (AI) and machine learning (ML) may be incorporated in communication networks (e.g., 5G), and may be used in reducing an overhead in resource elements (REs) for channel estimation. Using an AI-based channel estimation solutions, a small number of demodulation reference signals (DMRSs) REs may be provided in certain slots. In such communication networks, there may be two DMRS types supported, such as DMRS type-1 and DMRS type-2. Such AI-based approaches may be applied to DMR type 2. As a result, more DMRS REs can be used for data transmission instead and the system transmission capacity may be increased. To this end, some new DMRS patterns and related signaling or mechanisms may be leveraged.

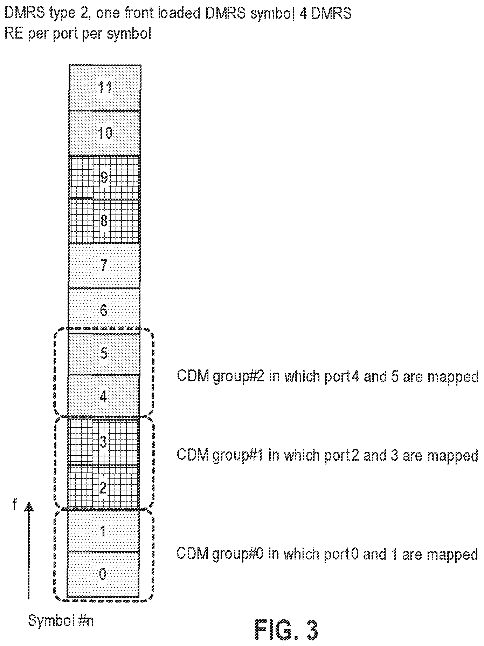

Referring now to FIG. 3, depicted is a block diagram of an example of DMRS type-2 with one front loaded DMRS symbol. As shown, the DMRS pattern for DMRS type-2 within one PRB, in the case when one front loaded DMRS symbol may be configured by RRC signaling or indicated by DCI signaling. Two adjacent frequency REs may form one DMRS code division multiplexing (CDM) group. Specifically, DMRS ports 0 and 1 may be multiplexed in CDM group #0. For example, port 0 and port 1 may be multiplexed in RE #0 and RE #1 in CDM manner, and port 0 and port 1 may also be multiplexed in RE #6 and RE #7 in CDM manner. Thus, CDM group #0 may be repeated twice, in which one may be in RE#0 and #1 and the other one may be in RE #6 and #7. Similar mapping may be used for other DMRS ports. Hence, in this example, 6 DMRS ports may be supported in the case of one front loaded DMRS symbol, and the density of each DMRS port may be 4 REs per PRB per symbol.

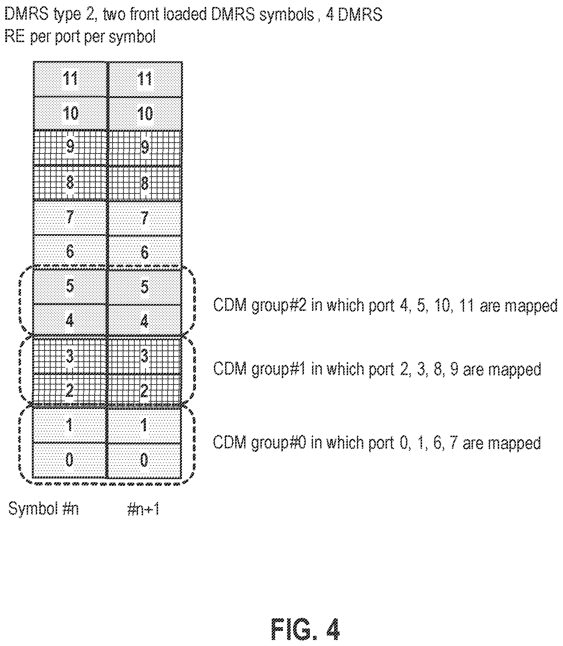

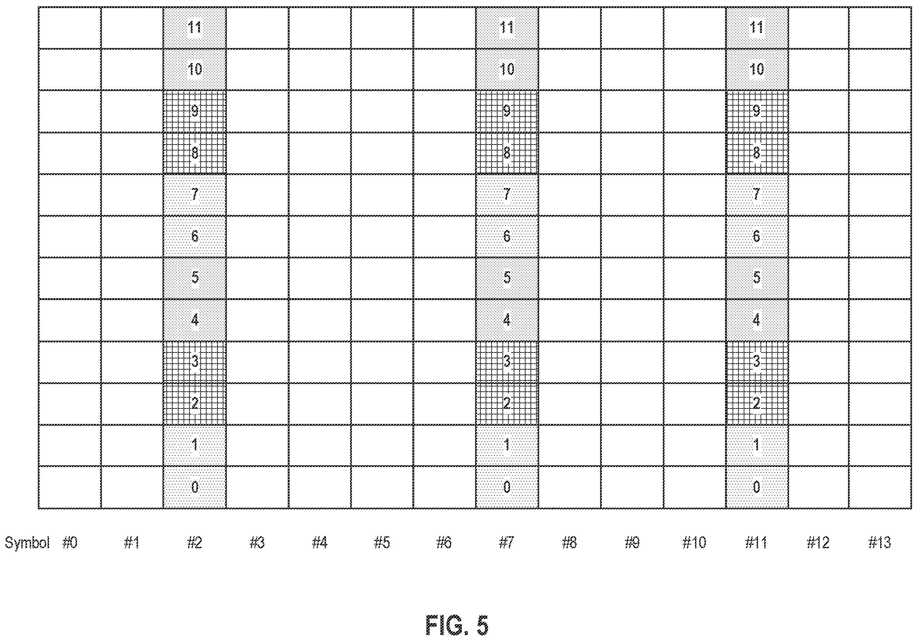

Referring now to FIG. 4, depicted is a block diagram of an example of DMRS type-2 with two front loaded (e.g., time domain (TD)-orthogonal cover code (OCC)) DMRS symbols. As shown, the DMRS pattern for DMRS type-2 within one PRB (e.g., one column) in the case when two front loaded DMRS symbols may be configured by radio resource control (RRC) signaling or indicated by DCI signaling. Four adjacent REs may form one DMRS CDM group. Specifically, DMRS port 0, 1, 6 and 7 may be multiplexed in CDM group #0 in CDM manner. Similar mapping may be used for other DMRS ports. In summary, 12 DMRS ports may be supported in the case of two front loaded DMRS symbols, and the density of each DMRS port may be 8 REs per PRB per 2-symbols. In one PRB, each CDM group may be mapped twice. For example, CDM group #0 may be mapped on RE #0, #1 and also RE #6, #7. Further, referring to FIG. 5, depicted is a block diagram of an example of DMRS type-2 with one front loaded and two additional DMRS symbols. As shown, in one slot, one front loaded DMRS symbol (e.g., one column) and X = 0, 1, 2 at least one additional DMRS symbol can be configured. In this example, DMRS symbols 2, 7, and 11 can be configured. One or more other symbols may be configured, such as in addition to or instead of DMRS symbols 2, 7, and/or 11, for example.

### I. Implementation 1

In some implementations, for uplink (UL) transmission (e.g., the transmission of the DMRS from the UE 104 to the BS 102), the UE 104 may receive an indication of the DMRS ports from the BS 102. The UE 104 can modulate (e.g., encode) the DMRS ports according to a length of an OCC (e.g., using an OCC of length 4) in one CDM group on one OFDM symbol. For downlink (DL) transmission (e.g., the UE 104 receiving DMRS from the BS 102), the BS 102 may indicate the DMRS ports to the UE 104. The DMRS ports may be modulated (e.g., decoded) according to the length of the OCC, such as an OCC of length 4 in one CDM group on one OFDM symbol.

In some cases, the DMRS ports may be associated with or related to an OCC in at least one code division multiplex (CDM) group mapping on various non-continuous resources. The non-continuous resources may include/contain at least two resources that are non-continuous (e.g., not all the resources within the same CDM group are continuous). The non-continuous resources may be included in or a part of at least two resource groups, where the two groups are non-continuous. In this example, each group may include at least two resources, and the resources in the respective group can be continuous.

The resources may include, be a part of, or correspond to resource elements (REs) in the frequency domain and/or orthogonal frequency division multiplexing (OFDM) symbols with DMRS in the time domain. For example, in the frequency domain, the OCC with length 4 in one CDM group can be mapped to at least REs #0, 1, 6, and 7. In this example, with two groups of REs, the groups may include REs #0, 1, and REs #6, and 7, respectively. The two REs in the respective CDM group can be continuous, and the two RE groups can be non-continuous (e.g., different frequency bands or non-adjacent ports). The non-continuous RE groups may be referred to as or called non-continuous resources, such as discussed herein. The RE group may refer to continuous strands of REs within the respective group, and the CDM group may include one or more RE groups, which may be non-continuous or discontinuous.

The continuous resources can correspond to or refer to at least two resources marked/indicated/configured/associated with continuous indexes in the time domain and/or in the frequency domain (e.g., REs #0 and #1 in the frequency domain or OFDM symbols #2 and #3 in the time domain, which are marked with continuous or consecutive indexes). Non-continuous resources may refer to at least two groups of resources marked with non-continuous or nonconsecutive index, and one or more other indexes may be in between the at least two groups of resources. For instance, in each group, the resources can be continuous, such as REs #0 and #1 in the frequency domain or OFDM symbols #2 and #3 in the time domain. Further, between the groups, the resources can be non-continuous, e.g., group 1 can include REs #0 and #1 in the frequency domain or OFDM symbols #2 and #3 in the time domain, and group 2 can include REs #6 and #7 in the frequency domain or OFDM symbols #8 and #9 in the time domain. In some cases, and in another example, each of the non-continuous groups may include one resource, where the resources between the groups can be non-continuous. Each RE group may include at least one resource in the time domain. For example, the number of OFDM symbols in a single group may be one (e.g., one of the DMRS symbols of #2 or #9). With two groups of resources, at least one RE can be included or occupied in each group, and the two groups may be non-continuous resources with an OCC code in one CDM group. For example, if the DMRS symbols are #2, 3, 8, and 9, the continuous symbols can be in one resource group (e.g., REs #2, 3 can be in a first RE group, and REs #8, 9 can be in a second/another group). The two resources in each group (e.g., #2 and #3 or #8 and #9) can be continuous, where the two groups may not be continuous (e.g., non-continuous or discontinuous). In this example, the two resource groups can be associated with OCC included in a particular CDM group.

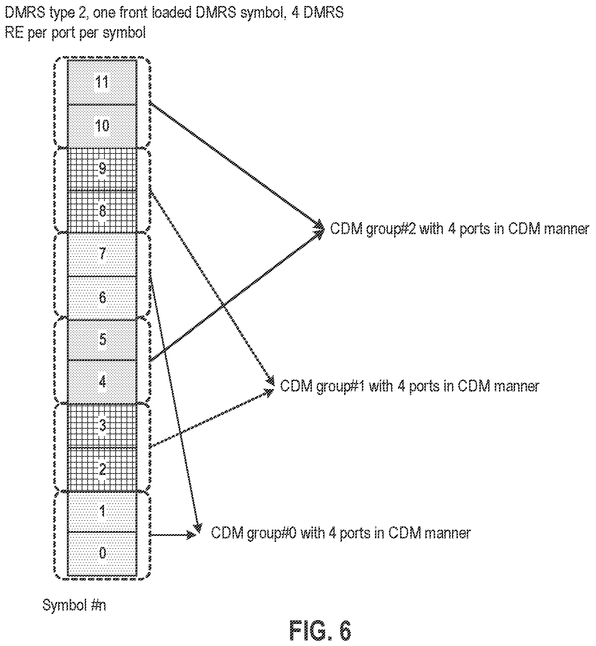

According to the invention and referring to FIG. 6, depicted is a block diagram of DMRS CDM groups (e.g., frequency domain (FD)-OCC (single column)) with four DMRS ports in one CDM group. For DMRS type-2, when the DMRS is over a single OFDM symbol, the DMRS ports in at least one CDM group can include at least or up to 4 DMRS ports over 4 REs (e.g., either continuous or non-continuous REs within the CDM group). As shown, the non-continuous subcarriers #0, 1, 6, 7 (e.g., the 4 REs of CDM group 0) can be used as one CDM group with 4 DMRS ports (e.g., instead of 2 DRMS ports for a single symbol). In this example, as shown in FIG. 6, for DMRS type-2, three CDM groups can be supported, with up to 12 DMRS ports supported on one OFDM symbol in the time domain.

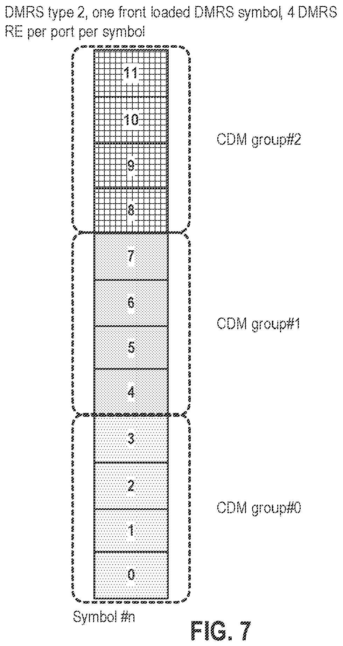

Referring to FIG. 7, depicted is a block diagram of an example of DMRS CDM groups with four DMRS ports on four continuous REs in one CDM group. As shown, for double-symbol DMRS ports, if 12 DMRS ports are supported on a single OFDM symbol, and the double-symbol DMRS utilizes an OCC length of 2 in the time domain of the two OFDM symbols, together with the OCC in the frequency domain, up to or at least 8 DMRS ports can be supported/configured/implemented in one CDM group. Further, up to or at least 24 DMRS ports can be supported for double-symbol DMRS ports, such as described herein.

For example, when the DMRS is over two continuous OFDM symbols, the DMRS ports in the CDM group can include up to 8 DMRS ports over 8 REs (e.g., either continuous or non-continuous REs). In another example, each DMRS port can be mapped on four continuous REs of one CDM group on one OFDM symbol. At least one of the designs, such as shown in at least FIGs. 6-7 can be utilized/considered/implemented for DMRS type-1 and/or DMRS type-2.

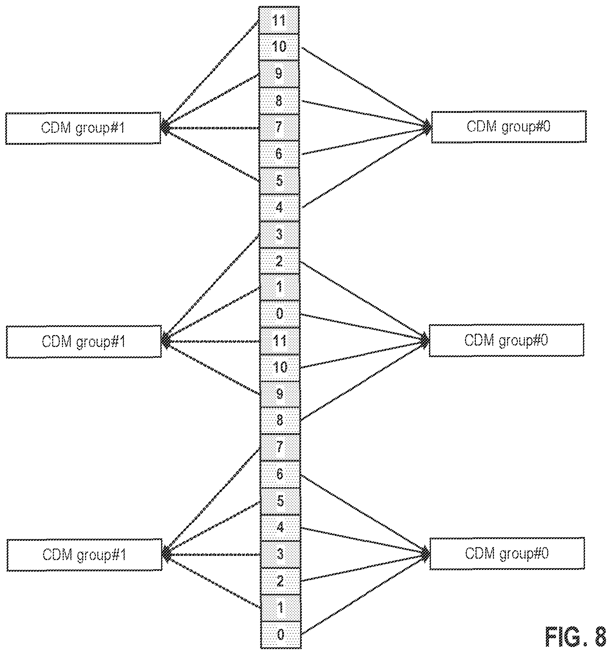

According to the invention and referring to FIG. 8, depicted is a block diagram of DMRS CDM groups with 4 DMRS ports in each CDM group for DMRs type-1. As shown, for DMRS type-1 over one OFDM symbol of the DMRS, a CDM group can be mapped across at least two resource blocks (RBs) (e.g., each RB can include REs #0 to #11, thereby configured to 24 REs associated with 24 DMRS ports). The two adjacent scheduling RBs can be bundled/grouped/coupled for DMRS mapping. In this example, at least 12 REs can be included in each CDM group (e.g., each of 4 REs in the respective CDM groups #0 and #1 can use one OCC of length 4). Two CDM groups (e.g., two middle CDM groups #0 and #1) may each be mapped on both of the two scheduling RBs. For example, one DMRS port or one DMRS group can be mapped on or to REs #8 and #10 of the first RB and REs #0 and #2 of the second RB, as connected to CDM group #0. In this example, the DMRS mapping on the respective four REs across multiple RBs can be from a single CDM group. In another example, DMRS ports can be mapped on REs #9 and #11 of the first RB and REs #1 and #3 of the second RB from another CDM group (e.g., CDM group #1).

Therefore, based on the indication or pattern shown in FIG. 8, two DMRS CDM groups can be supported on one OFDM symbol, where up to 8 DMRS ports may be supported on one OFDM symbol, and up to 16 DMRS ports can be supported for double-symbol DMRS ports. The number of scheduling RBs for UL transmission and/or DL transmission can be even. For the RBs of non-continuous scheduling (e.g., a portion of REs from one RB and another portion of REs from another RB), if the OCC with length 4 is enabled for DMRS type-1, the number of scheduled RBs for one/each continuous scheduling over a frequency domain (e.g., forming an RB group) can be even. In this case, the continuous scheduling may refer to REs within the same RB, such as the number of REs (e.g., #9 and #11) of a first RB and the number of REs (e.g., #1 and #3) of a second RB associated with CDM group #1 can be even.

In some implementations, if each group (e.g., RB group) of continuous scheduled RBs is odd, the virtual RB (VRB) (e.g., regardless of the physical mapping) may be used for the DMRS port modulation (e.g., encoding or decoding) with an OCC length of 4. The virtual RB can refer to RBs scheduled by the BS 102 (e.g., transmission node) with a virtual continuous scheduling index. The virtual RBs can be mapped on physical RBs. The index of VRB may be continuous, and can be mapped on PRBs with non-continuous indexes. The OCC length may correspond to or be associated with the number of REs within the associated CDM group. For instance, when two groups of scheduled physical RBs (PRBs) are used/utilized/configured for mapping the DMRS with the OCC length of 4, if one group of scheduled RB is odd, the DMRS of the last RB of this group can be mapped to the RB in the next group (e.g., enabling both groups of scheduled RBs to be even). For example, the DMRS port in one CDM group can be mapped across RBs, such as DMRS port #0 may be associated with one OCC and mapped on the REs of #10 and #11 of the first PRB and REs #0 and #1 of the second PRB.

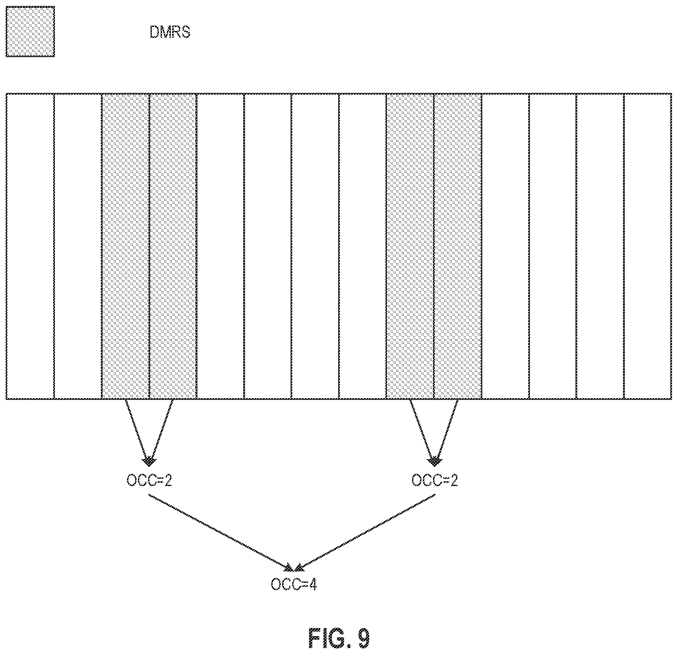

Referring to FIG. 9, depicted is a block diagram of an example of DMRS CDM groups with 4 DMRS ports in one CDM group in the time domain. When the OCC length is 2, up to 12 DMRS ports for two front loaded symbols can be supported (e.g., each symbol can include/have up to 6 DMRS ports). When the OCC length is extended to 4, up to 24 DMRS ports can be supported. For time domain (TD)-OCC, one CDM group may contain/include or be mapped/linked to more than one symbol (e.g., four symbols) in the time domain, such as shown in FIG. 9. In this example, one DMRS port can be mapped on 4 OFDM symbols of the same RE regardless of the frequency domain. In some cases, the 4 OFDM symbols may be continuous or discontinuous/non-continuous in the time domain. Each of the symbols (e.g., each column shown in at least FIG. 9) can include/have a respective frequency pattern (e.g., to be decoded), such as the frequency pattern shown in at least one of FIGs. 6-8, for example.

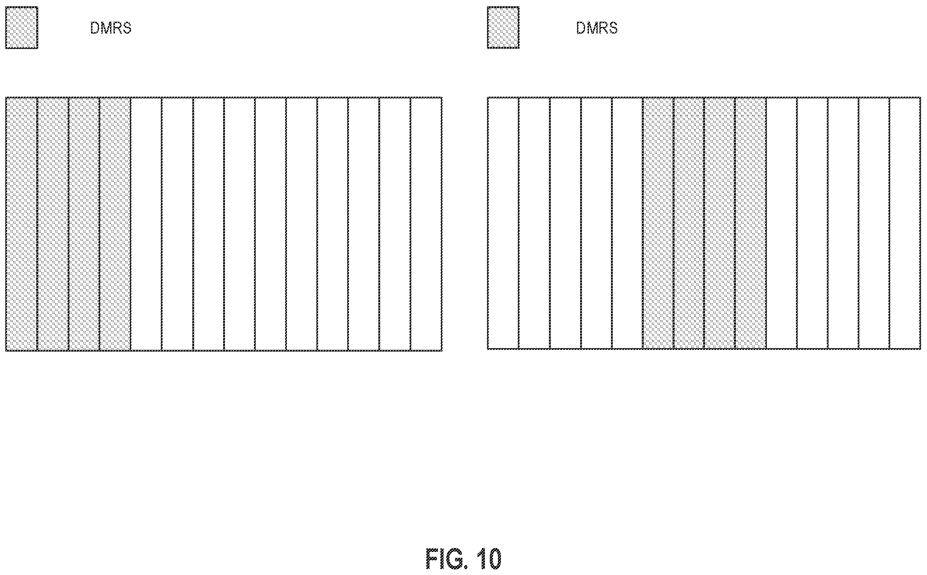

Referring to FIG. 10, depicted is a block diagram of an example of 4-symbol DMRS in one CDM group. For DMRS on the continuous OFDM symbols, any OFDM symbol that the DMRS starts mapping to (e.g., symbol 0 on the first set of symbols shown to the left of FIG. 10, or symbol 5 on the second set of symbols shown to the right of FIG. 10), the three or four continuous OFDM symbols can be mapped with TD-OCC of length 4, respectively. As shown on the first/left diagram of FIG.10, four continuous OFDM symbols may be used for DMRS mapping, and TD-OCC of length 4 can be used. Each element of the OCC can represent one OFDM symbol. TD-OCC of length 4 can be configured/pre-defined/indicated by the BS 102. In certain cases with only 3 OFDM symbols supported in a CDM group, TD-OCC of length 3 can be supported between the 3 OFDM symbols, for example.

### II. Implementation 2

An OCC with length 4 (e.g., a new OCC) can be used to modulate (e.g., encode or decode) the DMRS port in at least one CDM group. The OCC can be used as at least one of FD-OCC in the frequency domain and/or TD-OCC in the time domain. In this example, a new table may be designed/constructed/implemented/configured/utilized for the DMRS ports if OCC with a length of 4 on each OFDM symbol is configured by radio resource control (RRC) or indicated by medium access control control element (MAC CE) or downlink control information (DCI) (e.g., MAC CE/DCI) as in Table 1. Table 1 can indicate the DMRS ports with FD-OCC of length 4 for both DMRS type-1 and DMRS type-2.

**Table 1**

| DMRS ports | RE- 0 | RE -1 | RE- 6 | RE-7 |
|---|---|---|---|---|
| 0 | 1 | 1 | 1 | 1 |
| 1 | 1 | -1 | 1 | -1 |
| 2 | 1 | 1 | -1 | -1 |
| 3 | 1 | -1 | -1 | 1 |

Each value under the RE-0, RE-1, RE-6, and RE-7 can represent/indicate/include a respective OCC bit for DMRS ports (e.g., DMRS ports 0 to 3) to apply to the listed REs. To support the co-existence of the a first UE (e.g., UE 104 supporting previous standards or protocol) and a new/second UE (e.g., UE 104 supporting new standards or protocol), at least a portion of Table 1 may be modified/configured/updated, such as shown in Table 2. For example, for UEs 104 with FD-OCC length of 2 (e.g., the first UE) and length of 4 (e.g., the second UE), the first and second UEs can be scheduled (e.g., for UL transmission) on different subsets of DMRS ports in one CDM group (e.g,. the same CDM group).

For instance, if the first UE (e.g., UE 104 which supports previous/old standards or protocol) is indicated (e.g., DL transmission) with DMRS port 0, the second UE can be indicated with DMRS ports 2 and/or 3. In this example, the second UE may be indicated with DMRS port 1 because the OCC length 2 bit values (e.g., RE-0 and RE-1, as shown in Table 2) are the same as between port 0 and port 1. Further, the entry or the index of DMRS ports with OCC value can be used to indicate the DMRS ports with OCC lengths of 2 and/or 4. The different entries or indexes can indicate the OCC of each DMRS port, and UEs 104 with at least a partial entry of OCC of length 2 can be co-scheduled with UEs 104 with at least a partial entry of OCC of length 4. In another example, if the first UE is indicated with DMRS port 1, the DMRS port 0 may only be indicated to the first UE.

As shown in Table 2, the first UE supporting older version of cellular protocol or standards with DMRS port 0 and/or port 1 may co-exist with the second UE supporting the new or updated standards with DMRS port 2 and/or port 3. In some cases, the first UE with DMRS ports 2/3 can co-exist with the second UE with DMRS ports 0/1. Further, as an example, if all the DMRS ports are indicated as new UEs, any of the DMRS ports can be used for these indicated UEs.

**Table 2**

| DMRS ports | RE-0 | RE-1 | RE-6 | RE-7 |
|---|---|---|---|---|
| 0 | **1** | **1** | 1 | 1 |
| 1 | **1** | **1** | -1 | -1 |
| 2 | 1 | -1 | 1 | -1 |
| 3 | 1 | -1 | -1 | 1 |

In some implementations, time domain OCC may also be indicated. For example, if the time domain OCC is indicated/provided/included, such as shown in Table 3.1, one CDM group (e.g., CDM group 0) can be taken/configured by the RRC or indicated by/via the DCI. In this example, other CDM groups (e.g., CDM groups 1 and 2) may be merged into Table 3.1. For DMRS type-2, one OFDM may contain/include up to 12 DMRS ports (e.g., 4 DMRS ports supported per/for each CDM group). For double-symbol DMRS (e.g., two symbols), up to 8 DMRS ports may be supported in each CDM group (e.g., up to 24 total DMRS ports supported for the three CDM groups).

In Table 3.1, DMRS ports with FD-OCC of length 4 can co-exist with length 2 for DMRS type-2. The indexes for the 8 DMRS ports can correspond to or include ports #0, 1, 2, 3, 12, 13, 14, and 15 for CDM group #0. In some cases, DMRS ports #0, 1, 12, and 13 configured for the first UE (e.g., UE 104 which supports older standards) or DMRS port #2, 3, 14, and 15 configured for the second/new UE, or vice versa, can be scheduled simultaneously. In this case, the first UE and the second UE may not be scheduled simultaneously in port groups #0, 1, 12, and 13 or port groups #2, 3, 14, and 15. The 1^{st} DMRS symbols and the 2^{nd} DMRS symbol can include or correspond to the OFDM symbols mapped with DMRS in one CDM group and with TD-OCC of length 2.

**Table 3.1**

| DMRS ports | RE-0 | RE-1 | RE-6 | RE-7 | 1^{st} DMRS symbol | 2^{nd} DMRS symbol |
|---|---|---|---|---|---|---|
| 0 | 1 | 1 | 1 | 1 | 1 | 1 |
| 1 | 1 | 1 | -1 | -1 | 1 | 1 |
| 2 | 1 | -1 | 1 | -1 | 1 | 1 |
| 3 | 1 | -1 | -1 | 1 | 1 | 1 |
| 12 | 1 | 1 | 1 | 1 | 1 | -1 |
| 13 | 1 | 1 | -1 | -1 | 1 | -1 |
| 14 | 1 | -1 | 1 | -1 | 1 | -1 |
| 15 | 1 | -1 | -1 | 1 | 1 | -1 |

In particular, as shown in Table 3.1, for DMRS type-1, up to 16 DMRS ports for double-symbol can be supported (e.g., 8 DMRS ports for each of the two symbols). Further, the DMRS port associated with the OCC in the frequency domain can be provided/shown in Table 3.1. Additionally or alternatively, Table 3.2 can include or show the co-existence of DMRS ports with FD-OCC of length 4 with DMRS ports with FD-OCC of length 2 for DMRS type-1. As shown, the DMRS port indexes can be different between DMRS type-1 compared to DMRS type-2. In this example, DMRS type-1 can include DMRS ports #0, 1, 2, 3, 8, 9, 10, and 11.

**Table 3.2**

| DMRS ports | RE-0 | RE-1 | RE-6 | RE-7 | 1^{st} DMRS symbol | 2^{nd} DMRS symbol |
|---|---|---|---|---|---|---|
| 0 | 1 | 1 | 1 | 1 | 1 | 1 |
| 1 | 1 | 1 | -1 | -1 | 1 | 1 |
| 2 | 1 | -1 | 1 | -1 | 1 | 1 |
| 3 | 1 | -1 | -1 | 1 | 1 | 1 |
| 8 | 1 | 1 | 1 | 1 | 1 | -1 |
| 9 | 1 | 1 | -1 | -1 | 1 | -1 |
| 10 | 1 | -1 | 1 | -1 | 1 | -1 |
| 11 | 1 | -1 | -1 | 1 | 1 | -1 |

### III. Implementation 3

In some implementations, two groups of DMRS ports can be modulated (e.g., encoded or decoded) by a two-step OCC. The two-steps OCC can be enabled/indicated by at least one of RRC, MAC CE, and/or DCI, among other indications to the UE 104. The two-step OCC may refer to applying/taking/executing/performing OCC in multiple iterations or steps. For example, in a first step, an OCC (e.g., of length 2) can be applied or used to modulate the DMRS port of a first UE (e.g., UE 104 which supports an older version of the cellular protocol or standards). The DMRS port indexes may be indicated/provided from #0 to #7 (e.g., 8 DMRS ports) for DMRS type-1 and #0 to #12 (e.g., 12 DMRS ports) for DMRS type-2.

Further, in a second step, another OCC of length 2 can be applied/used/enabled to modulate the result (e.g., modulation of the DMRS port of the first UE) of the first step, thereby obtaining a second result. The second step may be enabled if the total number of DMRS ports is larger/greater than 8 for DMRS type-1 and larger than 12 for DMRS type-2, such as shown in Table 4.1 and Table 4.2 respectively, and the second step of OCC can be used to modulate the first step of OCC (e.g., the results of the first step) and both of the OCC can be used to modulate the DMRS ports. For instance, index 11 (e.g., [1,1]) of the second OCC step may be translated to [1,1,1,1], where each "1" of the [1,1] in the second step of OCC may represent the actual OCC of the 1^{st} step of OCC, e.g., if the first step of OCC is indicated as [1,1], each value of "1" in the second step of OCC can represent [1,1] and each value of -1 in the second step of OCC represent [-1,-1]. For example, Table 4.1 can include or show parameters for physical downlink channel (PDSCH) DMRS configuration type 1, Table 4.2 can include parameters for PDSCH DMRS configuration type 2.

**Table 4.1**

| ***p*** | *w*_{f}(*k'*) | | *w*ₜ(*l*') | |
|---|---|---|---|---|
| | *k' =* 0 | *k' =* 1 | *l'* = 0 | *l' =* 1 |
| 9 | +1 | +1 | +1 | +1 |
| 10 | +1 | -1 | +1 | +1 |
| 11 | +1 | +1 | +1 | +1 |
| 12 | +1 | -1 | +1 | +1 |
| 13 | +1 | +1 | +1 | -1 |
| 14 | +1 | -1 | +1 | -1 |
| 15 | +1 | +1 | +1 | -1 |
| 16 | +1 | -1 | +1 | -1 |

**Table 4.2**

| ***p*** | RE in one CDM group | | Symbol in one CDM group | |
|---|---|---|---|---|
| | *k' =* 0 | *k' =* 1 | *l'* = 0 | *l' =* 1 |
| 12 | +1 | +1 | +1 | +1 |
| 13 | +1 | -1 | +1 | +1 |
| 14 | +1 | +1 | +1 | +1 |
| 15 | +1 | -1 | +1 | +1 |
| 16 | +1 | +1 | +1 | +1 |
| 17 | +1 | -1 | +1 | +1 |
| 18 | +1 | +1 | +1 | -1 |
| 19 | +1 | -1 | +1 | -1 |
| 20 | +1 | +1 | +1 | -1 |
| 21 | +1 | -1 | +1 | -1 |
| 22 | +1 | +1 | +1 | -1 |
| 23 | +1 | -1 | +1 | -1 |

### IV Implementation 4

In some implementations, a certain OCC length can be used for modulation, such as by the BS 102 and/or the UE 104. The length of the OCC may be indicated by at least one of a configuration (e.g., RRC signaling), a reserved bit within a DCI field of the MAC CE, among others. For example, the DMRS port with OCC of length 4 can be enabled by the RRC configuration. The RRC signaling can configure the OCC of length 4, which can be enabled when the number of DMRS ports is larger than 8 for DMRS type-1 or 12 for DMRS type-2.

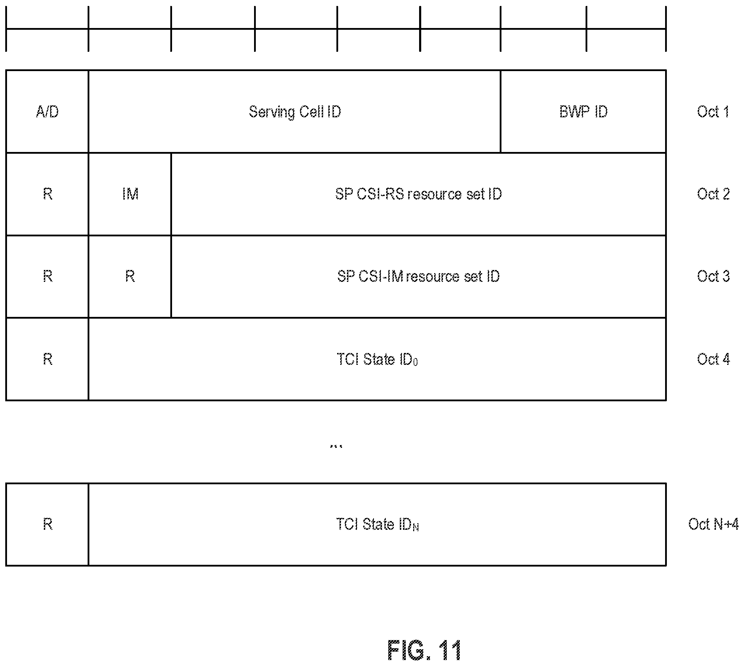

Referring to FIG. 11, depicted is an example of TCI states in MAC CE. Each "Oct" can represent one octet, and 8-bit can be used in each octet. In another example, a reserved bit of MAC CE can indicate the enabling of DMRS ports with OCC of length 4 (e.g., among other lengths). The TCI states activated for CSI-RS can include/have at least one reserved bit for each TCI state identifier (ID). In this example, for UL transmission, the DMRS ports can be associated with or related to sounding reference signal (SRS) ports or resources. The SRS port or resources can achieve/obtain/receive/identify the QCL information from the TCI states of the DL RS, such as CSI-RS.

As such, if the DMRS ports of UL transmission are indicated with one or more TCI states, the reserved bits for the TCI states (e.g., reserve bit for each TCI state, such that the OCC length indication is specific to each TCI state) can be used/applied to indicate whether the DMRS ports are modulated with OCC of length 2 or length 4. For instance, in the DCI field, one bit can be used to enable the OCC with length 4, e.g., the one bit can be used to indicate whether the DMRS port for UL or DL transmission is modulated with OCC of length 2 or length 4. In some cases, a reserved bit of 1 may indicate an OCC of length 4 and a reserved bit of 0 may indicate an OCC of length 2, or vice versa.

### V Implementation 5

In some implementations, an entry/indication of the antenna port field (e.g., which may be similar to DMRS port field) in DCI can be used to indicate whether an OCC of length 2 or length 4 is with the DMRS ports. For example, the DMRS ports with OCC length 4 and/or length 2 can be indicated separately. In this example, if the OCC with length 4 is enabled, Tabl 5.1 may be used/configured to indicate the DMRS port in DCI. Otherwise, a Table of certain systems or standards may be used to indicate the DMRS ports with an OCC length of 2. As shown in Table 5.1, entries of the antenna port (e.g., #0 to #19) can be shown. In this Table, the transform precoder may be disabled, such that Digital Fourier Transform (DFT) may not be needed for the data mapping on the OFDM symbols, e.g., cyclic prefix OFDM transmission. Further, the DMRS type can be set to 2, the max length of the OCC length can be set to bit 1 (e.g., indicating OCC length 4, in this case), and rank 1 can be configured. Other Tables discussed herein may include one or more similar or different information or configuration. The rank may represent the number of layers of the antenna elements.

Each of the Tables (e.g., Tables 5.1-5.9) may be indicated in the DCI, where each value or entry may represent/indicate a respective or a different DMRS port. The DMRS port(s) with OCC length of 4 or OCC length of 2 may be indicated by the entry of DMRS port indication in the DCI. Different entries can indicate the same DMRS ports with different OCC lengths. For example, as shown in Table 5.2, the entries from values #0 to #11 (e.g., antenna ports) can be used to indicate the DMRS ports with OCC length of 2, such as two DMRS ports in each CDM group on one OFDM symbol in the time domain. Table 5.2 (e.g., the entire Table) can be used to indicate the DMRS ports with OCC length 4. For instance, Table 5.2 may be used for both DMRS port numbering in the CDM group with OCC of length 2 and length 4, and entries #0 to #11 can be used to indicate the DMRS port for the first UE (e.g., UE with OCC length of 2 where there is a maximum of 2 DMRS ports in one CDM group on one OFDM symbol). Tables 5.1 and 5.2 may be used for at least the first UE (e.g., UE 104 with the older version of the protocol) and the second UE (e.g., UE 104 with new or updated protocol). As shown in the Tables, such as Tables 5.1-5.9, the bolded values may, in some cases, represent or indicate one or more new/additional DMRS ports.

**Table 5.1: Antenna port(s), transform precoder disabled, DMRS Type=2, maxLength=1, rank=1, OCC=4**

| **Value** | **Number of DMRS CDM group(s) without data** | **DMRS port(s)** |
|---|---|---|
| 0 | 1 | 0 |
| 1 | 1 | 1 |
| 2 | **1** | **6** |
| 3 | **1** | **7** |
| 4 | 2 | 0 |
| 5 | 2 | 1 |
| 6 | 2 | 2 |
| 7 | 2 | 3 |
| 8 | **2** | **4** |
| 9 | **2** | **5** |
| 10 | **2** | **6** |
| 11 | 2 | 7 |
| 12 | 3 | 0 |
| 13 | 3 | 1 |
| 14 | 3 | 2 |
| 15 | 3 | 3 |
| 16 | 3 | 4 |
| 17 | 3 | 5 |
| 18 | **3** | **6** |
| 19 | **3** | **7** |
| Reserved | Reserved | Reserved |

**Table 5.2: Antenna port(s), transform precoder disabled, dmrs-Type=2, maxLength=1, rank=1, OCC=2 or OCC=4**

| **Value** | **Number of DMRS CDM group(s) without data** | **DMRS port(s)** |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12 | **1** | **6** |
| 13 | **1** | **7** |
| 14 | **2** | **4** |
| 15 | **2** | **5** |
| 16 | **2** | **6** |
| 17 | **2** | **7** |
| 18 | **3** | **6** |
| 19 | **3** | **7** |
| Reserved | Reserved | Reserved |

In some implementations, if two DMRS ports are indicated, Table 5.3 can be used for indicating the DMRS port(s) with an OCC length of 4. The indication may be associated with an SRS resource indicator (SRI) or a transmit precoding matrix index (TPMI) field. In some cases, the indication may be enabled if an associated rank is at least one of rank 2, 3, or 4. With the support of up to 4 DMRS ports indicated for at least one UE 104, for indication of rank 3 and/or rank 4, at least one of Tables 5.4 and/or 5.5 can be used to indicate the DMRS port(s). Further, for ranks 2 to 4, Tables 5.3 to 5.3, respectively, can be modified in similar aspects as at least Table 5.2. For instance, the former/previous/old entry (e.g., #0 to #11) can be used for the first UE (e.g., up to 2 DMRS in one CDM group on one OFDM symbol), and the whole Table can be used to indicate the DMRS ports with OCC of length 4.

**Table 5.3: Antenna port(s), transform precoder is disabled, dmrs-Type=2, maxLength=1, rank=2**

| **Value** | **Number of DMRS CDM group(s) without data** | **DMRS port(s)** |
|---|---|---|
| 0 | 1 | 0,1 |
| **2** | **1** | **6,7** |
| 3 | 2 | 0,1 |
| 4 | 2 | 2,3 |
| **5** | **2** | **6,7** |
| **6** | **2** | **8,9** |
| 7 | 3 | 0,1 |
| 8 | 3 | 2,3 |
| 9 | 3 | 4,5 |
| **10** | **3** | **6,7** |
| **11** | **3** | **8,9** |
| **12** | **3** | **10,11** |
| 13 | 2 | 0,2 |
| Reserved | Reserved | Reserved |

**Table 5.4: Antenna port(s), transform precoder disabled, dmrs-Type=2, maxLength=1, rank =3**

| **Value** | **Number of DMRS CDM group(s) without data** | **DMRS port(s)** |
|---|---|---|
| 0 | 2 | 0-2 |
| 1 | 3 | 0-2 |
| 2 | 3 | 3-5 |
| 3 | **1** | **0,1,6** |
| Reserved | Reserved | Reserved |

**Table 5.5: Antenna port(s), transform precoder disabled, dmrs-Type=2, maxLength=1, rank =4**

| **Value** | **Number of DMRS CDM group(s) without data** | **DMRS port(s)** |
|---|---|---|
| 0 | 2 | 0-3 |
| 1 | 3 | 0-3 |
| 2 | **1** | **0,1,6,7** |
| Reserved | Reserved | Reserved |

In some implementations, for DMRS type-1, one CDM group may include or be mapped to 4 DMRS ports (e.g., up to 4 DMRS ports) on one OFDM symbol, and up to two CDM groups can be supported on each PRB of one OFDM symbol, e.g., up to 8 DMRS ports can be supported. In this example, up to 8 DMRS ports can be supported by the two CDM groups. Hence, the DMRS ports may be indicated/provided/configured in the DCI, such as in at least one of Tables 5.6 to 5.9, based on or according to the level of the rank.

**Table 5.6: Antenna port(s), transform precoder disabled, dmrs-Type=1, maxLength=1, rank = 1**

| **Value** | **Number of DMRS CDM group(s) without data** | **DMRS port(s)** |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 1 | 4 |
| 7 | 1 | 5 |
| 8 | 2 | 4 |
| 9 | 2 | 5 |
| 10 | 2 | 6 |
| 11 | 2 | 7 |
| 12-15 | Reserved | Reserved |

**Table 5.7: Antenna port(s), transform precoder disabled, dmrs-Type=1, maxLength=1, rank = 2**

| **Value** | **Number of DMRS CDM group(s) without data** | **DMRS port(s)** |
|---|---|---|
| 0 | 1 | 0,1 |
| 1 | 2 | 0,1 |
| 2 | 2 | 2,3 |
| 3 | 2 | 0,2 |
| 4 | 1 | 4,5 |
| 5-15 | Reserved | Reserved |

**Table 5.8: Antenna port(s), transform precoder disabled, dmrs-Type=1, maxLength=1, rank = 3**

| **Value** | **Number of DMRS CDM group(s) without data** | **DMRS port(s)** |
|---|---|---|
| 0 | 2 | 0-2 |
| 1 | 1 | 0,1,4 |
| 2 | 2 | 2,3,6 |
| 3-15 | Reserved | Reserved |

**Table 5.9: Antenna port(s), transform precoder disabled, dmrs-Type=1, maxLength=1, rank = 4**

| **Value** | **Number of DMRS CDM group(s) withput data** | **DMRS port(s)** |
|---|---|---|
| 0 | 2 | 0-3 |
| 1 | 1 | 0,1,4,5 |
| 2 | 2 | 2,3,6,7 |
| 3-15 | Reserved | Reserved |

In certain cases, for double-symbol DMRS, the number of DMRS ports supported can be doubled (e.g., 12 DMRS ports to 24 DMRS ports or 8 DMRS ports to 16 DMRS ports, etc.). Further, for double-symbol DMRS, a single TD-OCC can be supported. In this case, up to 8 DMRS ports may be supported in each CDM group. For example, four REs can be in each slot of the frequency domain, and two symbols can be in the time domain can be used to map the DMRS ports in a CDM group, e.g., FD-OCC with a length of 4 and TD-OCC with a length of 2.

Accordingly, for the double-symbol of the DMRS type-1 and/or DMRS type-2, the indication in the DCI field may be similar as indicated in one or more of Tables 5.1 to 5.9. For DMRS type-1, up to 16 DMRS ports may be supported, and DMRS ports #8 to #15 can be indicated, and for DMRS type-2, up to 24 DMRS ports can be supported, and DMRS ports #12 to #23 can be indicated.

### VI Implementation 6

In some implementations, the reserved bit(s) in the DMRS port field may each be used to indicate the DMRS port for certain UEs (e.g., the first UE supporting an older version of the standards or protocol) or the new UE (e.g., supporting a new version of the standards). For instance, the first UE can support up to 2 DMRS ports in one CDM group on one OFDM symbol and/or support up to 4 DMRS ports in one CDM group of double-symbol DMRS ports. The new UE may support up to 4 DMRS ports in one CDM group on one OFDM symbol and/or support up to 8 DMRS ports in one CDM group of double-symbol DMRS ports.

In this example, the reserved bit may be used for at least one of ranks 2, 3, or 4, among others. Based on at least one of Tables 5.1 to 5.9, five bits may be used for indicating the DMRS ports (e.g., DMRS port indication) for rank 1, four bits can be used for DMRS port indication for rank 2, and less than three bits can be used for DMRS port indication for rank 3 and/or rank 4. Therefore, if up to 5 bits are used in this DMRS port indication field in the DCI, one or more reserved bits can be used for the indication of the first UE and/or the new/second UE.

In some cases, for a certain rank, the UE 104 can modulate (e.g., decode) DMRS port with the OCC [1,1,1,1] with/of length 4 or OCC [1,1] of length 2. In this example, for the demodulation of the DMRS port, the modulation of the DMRS port(s) may not have a significant impact, because no other DMRS ports introduce interference to this particular DMRS port(s). However, for more than one DMRS port, the DMRS ports with different OCCs may impact the demodulation results. As such, for ranks 2 to 4, the reserved bit can be used to indicate the OCC length (e.g., length of 2 or length of 4) for the DMRS.

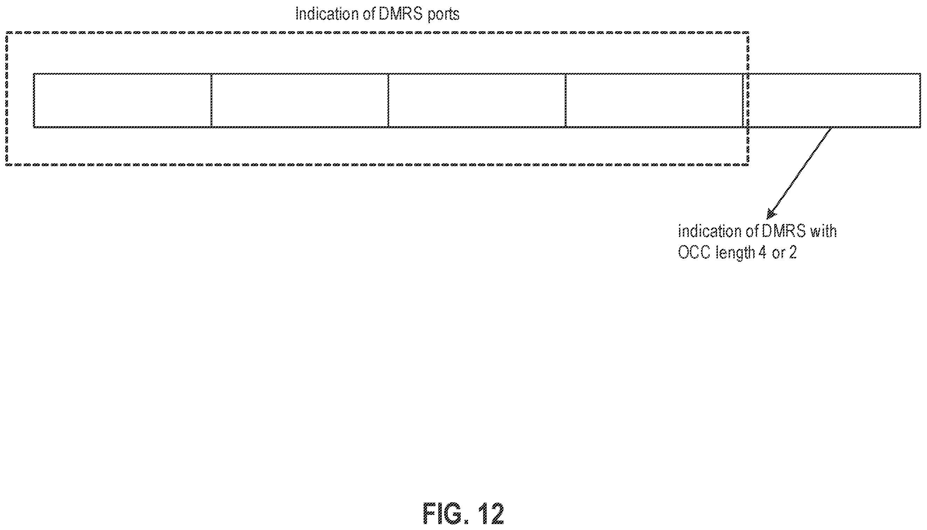

Referring to FIG. 12, depicted is an example of an indication of DMRS port with OCC length 4 or 2. In this example, to avoid or minimize/reduce impact to the demodulation results, the last bit in the DMRS indication field may be used as the reserved bit. As shown in FIG. 12, if the last bit in the DMRS port indication field (e.g., indication of DMRS ports) is indicated as 0, the DMRS ports can be configured to modulate with an OCC of length 2. Otherwise, if the last bit in the DMRS port indication field is indicated/provided/configured as 1, the DMRS ports can modulate with an OCC of length 4. In some cases, alternatively, if the last bit in the DMRS port indication field is indicated as 0, the DMRS ports can modulate with an OCC length of 4, and if the last bit in the DMRS port indication field is indicated as 1, the DMRS ports can modulate with an OCC length of 2.

### VII Implementation 7

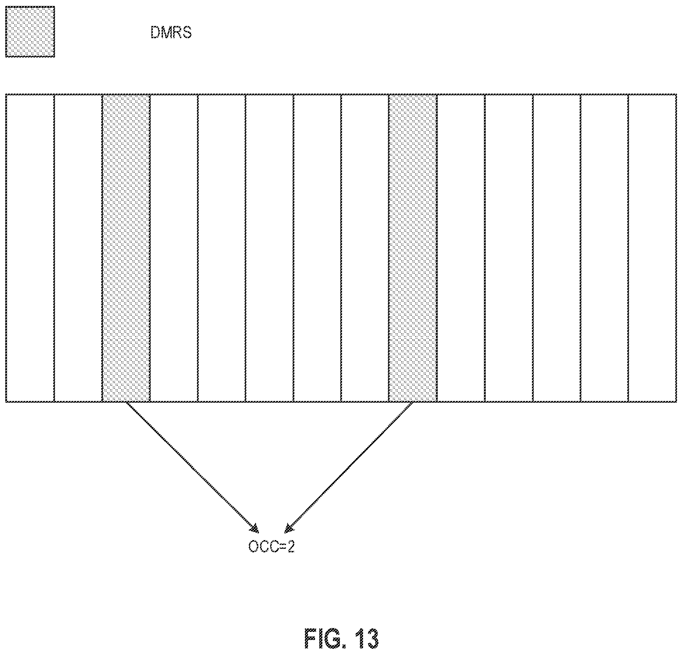

Referring to FIG. 13, depicted is a block diagram of an example of TD-OCC on non-continuous OFDM symbols. In some implementations, at least two non-continuous OFDM symbols may be used to map DMRS ports from at least one CDM group. In this example, TD-OCC can be used to modulate (e.g., decode) the DMRS ports in one/each CDM group of the non-continuous OFDM symbols. As shown in FIG. 13, the DMRS ports may be mapped on two non-continuous OFDM symbols (e.g., symbol #2 and symbol #8, where the first symbol is #0). The two OFDM symbols can be included in or a part of one CDM group and modulated with one OCC of length 2.

In some cases, one DMRS port can be associated with a respective OCC of [1,1] or [1,-1]. If up to 6 DMRS ports are supported on one OFDM symbol, the TD-OCC on two non-continuous OFDM symbols can support up to 12 DMRS ports for a single-symbol DMRS with TD-OCC of length 2. In the case of a double symbol DMRS, TD-OCC with length 4 can be used to support up to 24 DMRS ports for DMRS type-2, and/or support up to 16 DMRS ports for DMRS type-1, such as shown in conjunction with FIG. 9 (e.g., DMRS ports with TD-OCC of length 4). In this example, the OCC of length 4 can include or correspond to at least one of: [1,1,1,1], [1,1,-1,-1], [1,-1,1,-1], and/or [1,-1,-1,1]. Hence, if FD-OCC of length 2 is used/leveraged/selected, each CDM group may support up to 8 DMRS ports.

In some implementations, an indication of whether the DMRS in each CDM group in at least two non-continuous OFDM symbols is supported can be configured by the RRC. At least one field in the RRC for DL or UL transmission can be used to configure or indicate whether to support TD-OCC on non-continuous OFDM symbols. In some cases, the at least one field in the RRC may indicate whether to configure schemes/operations of certain protocols that require/need more than 12 DMRS ports.

In some cases, DCI signaling can be used (e.g., by the BS 102) to indicate the TD-OCC on non-continuous OFDM symbols. In this case, one bit in the DCI field and/or a reserved bit in the MAC CE field for activation of TCI states may be used/configured. In some cases, the number of DMRS ports can be used to indicate whether to apply TD-OCC on non-continuous OFDM symbols. For example, if the DMRS ports map 2 or 4 OFDM symbols in a certain slot, the TD-OCC on non-continuous OFDM symbols can be used. In another example, if the DMRS ports map 1 or 3 OFDM symbols in one slot, TD-OCC on non-continuous OFDM symbols may not be used.

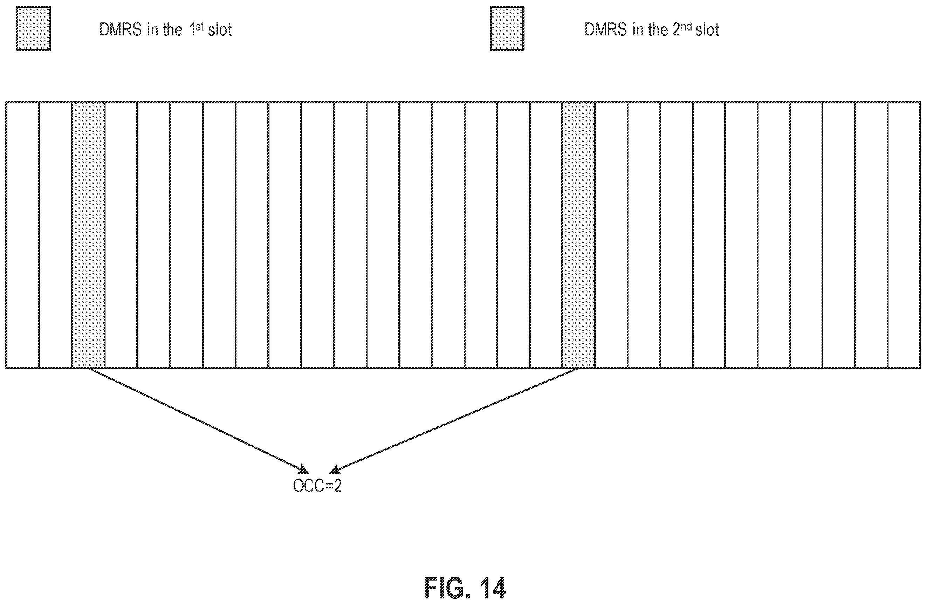

In some implementations, if the DMRS ports in one CDM group on non-continuous OFDM symbols are configured/indicated/provided/established, and 1 or 3 OFDM symbols in one slot is/are used to map the DMRS, TD-OCC can also be used on non-continuous OFDM symbols. Referring to FIG. 14, depicted is a block diagram of an example of a single symbol DMRS with TD-OCC in continuous slots. In this example, if only one OFDM symbol is used for DMRS mapping, the DMRS in continuous slots can be used as one CDM group with an OCC length of 2 for single symbol DMRS and/or with an OCC length of 4 for double symbol DMRS. In some cases, if one or more DMRS ports are mapped on three OFDM symbols (e.g., among other numbers of OFDM symbols), two of the three OFDM symbols can be used with TD-OCC of length 2. The two OFDM symbols of the three OFDM symbols may be the first two symbols by default (e.g., configurable to any other two symbols combinations, such as the first and last symbols, or the last two symbols).

### VIII Implementation 8

In some implementations, the FD-OCC or frequency division multiplexing (FDM) and TD-OCC can be indicated by an RRC signaling and/or indicated in the DCI field. The FD-OCC and/or FDM can be used if the RRC configured the application or enable of FD-OCC or FDM. In some cases, TD-OCC can be used if the RRC configured the application of TD-OCC. In certain aspects, when the number of DMRS symbols is configured or indicated as 1 or 3, the FD-OCC and/or FDM may be used, and when the number of DMRS ports is configured or indicated as 2 or 4, the TD-OCC can be used.

In some implementations, the number of scheduled RBs indicated in the frequency domain resource assignment (FDRA) field can be used to indicate whether the DMRS is mapped on an FDM/FD-OCC manner/approach/modality or TD-OCC manner. For instance, when the number of scheduled RB(s) number is even, the FDM/FD-OCC can be used, and when the number of scheduled RB(s) number is odd, the TD-OCC can be used.

In some implementations, the DMRS ports may be associated with the TCI field. The QCL parameters (e.g., spatial relation) can be indicated in the TCI field. The delay related parameter can be used to indicate whether FD-OCC is utilized/implemented or not utilized. The delay related parameter (e.g., at least one off an average delay or a delay spread) may have/incur an impact on the demodulation results in the frequency domain. For instance, when the delay or delay spread is large (e.g., the delay spread may be larger than 300 or 500 nanoseconds(ns)), the FDM or FD-OCC may not operate at an optimal capacity or performance for estimating the channel (e.g., communication channel), such as the quality of the channel. In this example, due to the reduced performance of the FDM or FD-OCC, the TD-OCC can be used instead of or in place of the FDM or FD-OCC.

In certain aspects, Doppler related parameters (e.g., at least one of a Doppler shift or a Doppler spread) can be used to indicate the Doppler related parameters of the DMRS. The Doppler related parameters can be used to reflect/indicate/obtain/identify/determine the speed of the UE 104 (e.g., location displacement, movement, etc. of the UE 104). For example, if the Doppler related parameter indicates a very high speed (e.g., more than 60 or 120 km/h), the demodulation results of different OFDM symbols may be different or inaccurate and co-demodulation of DMRS on non-continuous symbols may include/introduce/induce errors (e.g., additional errors). In this example, the TD-OCC may not be used when the UE 104 is moving at a speed that is prone to introducing errors. Instead, in this example, FDM or FD-OCC may be used.

In some cases, one bit in the DCI field can be used to indicate/represent whether the DMRS ports are used with FD-OCC/FDM or TD-OCC. In certain cases, a reserved bit in the MAC CE of TCI states activation field can be used to indicate whether the DMRS is to be modulated with FDM/FD-OCC or TD-OCC.

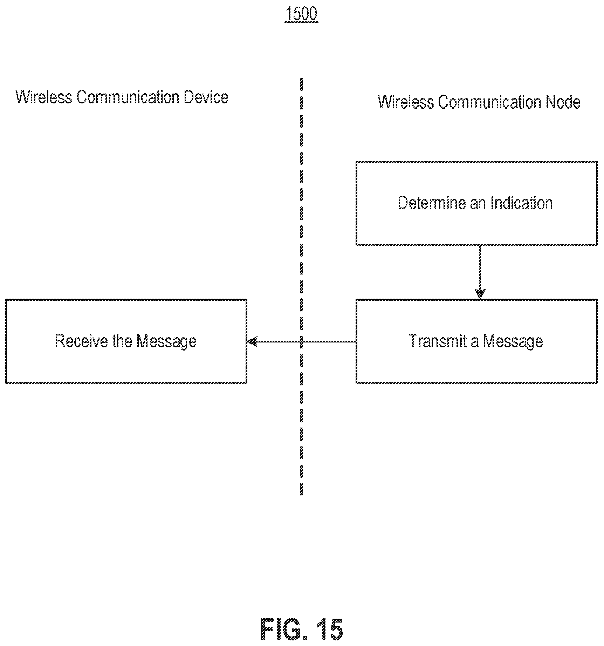

FIG. 15 illustrates a flow diagram of a method 1500 for DMRS port configuration and indication. The method 1500 can be implemented using any of the components and devices detailed herein in conjunction with FIGs. 1-14. In overview, the method 1500 can include determining an indication (1502). The method 1500 can include transmitting a message (1504). The method 1500 can include receiving the message (1506)
Referring now to operation (1502), a wireless communication node (e.g., a gNB/BS) may determine/obtain/identify an indication (e.g., DMRS port indication) of at least one DMRS port or multiple DMRS ports associated with an OCC in a CDM group mapping on various non-continuous resources. At operation (1504), in response to determining the indication of the DMRS ports, the wireless communication node can transmit/send/provide/signal a message that includes the indication to the wireless communication node (e.g., UE).

At operation (1506), the wireless communication device can receive/obtain/acquire the message that includes the indication from the wireless communication node. The indication can be used to indicate/configure the DMRS port(s) associated with at least one OCC in one or more CDM groups mapping on various non-continuous (e.g., discontinuous) resources or resource elements (REs). The non-continuous resources may include or refer to resources within a particular CDM group that are mapped to ports that are not adjacent or next to each other.

In some implementations, the wireless communication device may receive the DMRS (e.g., via DL DMRS) that is modulated (e.g., decoded) according to a length of the OCC (e.g., OCC of length 2 or OCC of length 4, etc.) from the wireless communication node. In some cases, the wireless communication device can transmit/provide/communicate the DMRS that is modulated (e.g., encoded) according to the length of the OCC to the wireless communication node.

In certain aspects, the OCC may be applied on or to at least one of various groups. For example, the OCC may be applied on at least two groups of REs (e.g., a first RE group can be #1 and #2, and a second RE group can be #6 and #7) comprised/included/established in various non-continuous resources. In this example, the two groups of REs can be non-continuous (e.g., in at least one of frequency domain or time domain) with respect to each other. In another example, the OCC may be applied on at least two groups of OFDM symbols in the time domain included in non-continuous resources. The two groups of OFDM symbols may be non-continuous (e.g., in at least one of frequency domain or time domain) with respect to each other. In further example, the OCC may be applied on at least two REs included in the non-continuous resources. The two REs can be non-continuous with respect to each other. In a certain example, the OCC may be applied on at least two OFDM symbols (e.g., OFDM symbols #2 and #9) included in the non-continuous resources. In this example, the two OFDM symbols can be non-continuous with respect to each other.

In certain cases, the resources in each of the at least two groups can be continuous with respect to each other. For example, a first group can include first continuous resources and a second group can include second continuous resources. The resources between the first group and the second group may be discontinuous or non-continuous. The resources can include at least one of the REs or OFDM symbols. In some implementations, the OCC, when having a length of 4, can include/comprise at least one of: [1,1,1,1], [1,1,-1,-1], [1,-1,1,-1], or [1,-1,-1,1].

In some implementations, the DMRS ports may be associated with the OCC having a length of 4, and can be co-scheduled (e.g., co-existence) with DMRS ports associated with an OCC having a length of 2, via at least one of: the OCC having the length of 2 can be or correspond to [1,1], the OCC having the length of 4 can be [1,-1,1,-1] or [1,-1,-1,1]; or the OCC having the length of 2 can be [1,-1], and the OCC having the length of 4 can be [1,1,1,1] or [1,1,-1,-1]. The length of the OCC may be indicated based on a bit value or according to a signal, for example.

In some cases, when the DMRS is over a single OFDM symbol (e.g., two or more symbols), the DMRS ports in the CDM group can include up to 4 DMRS ports over 4 REs. The REs may or may not be continuous. In some other cases, when the DMRS is over two continuous OFDM symbols, the DMRS ports in the CDM group can include/have up to 8 DMRS ports over 8 REs (e.g., may or may not be continuous REs). In some implementations, for DMRS type-1 over one OFDM symbol of the DMRS, a CDM group can be mapped across at least two RBs. For example, the at least two RBs may include at least one of: at least two continuous physical RBs, at least two continuous virtual RBs, or at least two RBs, each from one continuous scheduled physical RBs.

In some implementations, for DMRS type-1 over one OFDM symbol of the DMRS, a number of scheduled RBs for one continuous scheduling (e.g., which forms an RB group) over frequency domain can be even. In certain aspects, a first wireless communication device (e.g., a first UE that supports an older version of a cellular protocol or standards) supporting an OCC of length 2 and a second wireless communication device (e.g., a new/second UE that supports new or updated protocol or standards) supporting an OCC of length 4, can be scheduled on different subsets of DMRS ports in one CDM group. In some cases, the first wireless communication device supporting the OCC of length 2 and/or the second wireless communication device supporting the OCC of length 4, may be scheduled with at least one different value of OCC on the first two REs ports in one CDM group.

In some implementations, the OCC can include a length of 2 and be used in a first step (e.g., of two-step OCC) to modulate the DMRS, and an OCC for a second step can be enabled to modulate the result of the first step. In this case, the OCC for the second step can be enabled by at least one of: a total number of DMRS ports is/being larger than 8 for DMRS type-1, or larger than 12 for DMRS type-2. In some cases, the indication may be conveyed/indicated/provided to the wireless communication device by at least one of an RRC signaling, a MAC CE signaling, or a DCI signaling, such as from the wireless communication node.

In some implementations, the indication (e.g., DMRS port indication) of the DMRS ports may be conveyed by the DCI signaling, by at least one of: an entry of a DMRS port field, one bit on a field, a reserved bit of the DMRS port field, number of DMRS symbols indicated in a time domain resource assignment field, number of PRBs indicated in a frequency domain resource assignment field, one or more TCI states in a TCI field, one or more quasi co-location (QCL) related parameters, or spatial relation. In certain cases, the RRC signaling may configure or indicate at least one of: an enable (e.g., a field value) of the DMRS ports to apply the OCC in the CDM group mapping on the plurality of non-continuous resources (e.g., configured in one field in the RRC signaling), a scheme of downlink transmission with the DMRS ports to apply the OCC in the CDM group mapping on the plurality of non-continuous resources, and/or a scheme of uplink transmission with the DMRS ports to apply the OCC in the CDM group mapping on the plurality of non-continuous resources. The scheme may refer to scenerios where up to 24 DMRS ports and/or OCC of length 4 is to be configured or indicated. For example, if a subframe number (SFN) is configured, certain TCI states information may be limited/restricted.

In some implementations, the MAC CE signaling can activate/enable at least one of: an enable of the DMRS ports to apply the OCC in the CDM group mapping on the non-continuous resources, a scheme/scenario of downlink transmission with the DMRS ports to apply the OCC in the CDM group mapping on the non-continuous resources, and/or a scheme of uplink transmission with the DMRS ports to apply the OCC in the CDM group mapping on the non-continuous resources. In some cases, the indication of the DMRS ports may be associated with a sounding reference signal (SRS) resource indicator (SRI) field and/or a transmit precoding matrix index (TPMI) field. In certain cases, the indication may be enabled if an associated rank is at least one of 2, 3, or 4 (e.g., ranks 2 to 4). In some implementations, a reserved bit for activation of TCI states in the MAC CE signaling may be configured to indicate at least one DMRS port to apply the OCC in the CDM group mapping on the non-continuous resources.

In some implementations, whether the non-continuous resources is in the frequency domain and/or the time domain may be indicated by at least one of: an entry of a DMRS port field, one bit on a field, a reserved bit of the DMRS port field, number of DMRS symbols indicated in a time domain resource assignment field, number of physical resource blocks indicated in a frequency domain resource assignment field, one or more TCI states in a TCI field, one or more QCL related parameters, spatial relation, an RRC configuration, and/or a reserved bit in a field of a MAC CE signaling for activation of one or more TCI states. For example, the OCC may be used as FD-OCC (e.g., in the frequency domain) and/or TD-OCC (e.g., in the time domain), such as configured by the RRC, MAC CE, or indicated by the DCI.

As discussed herein, the definition/term/element/feature/indication/mention of "beam" may include, correspond to, or be a part of quasi-co-location (QCL) state, transmission configuration indicator (TCI) state, spatial relation state (e.g., sometimes referred to as spatial relation information state), reference signal (RS), spatial filter, and/or pre-coding. Further, the term "beam state" may be referred to as or called "beam." In some cases, the term "Tx beam" may include or correspond to QCL state, TCI state, spatial relation state, DL/UL reference signal (e.g., channel state information reference signal (CSI-RS), synchronization signal block (SSB) (e.g., sometimes referred to as SS/PBCH), demodulation reference signal (DMRS), sounding reference signal (SRS), and/or physical random access channel (PRACH)), Tx spatial filter, and/or Tx precoding.

In some cases, the term "Rx beam" may include or correspond to QCL state, TCI state, spatial relation state, spatial filter, Rx spatial filter, and/or Rx precoding. The term "beam ID" may include or correspond to/equivalent to QCL state index, TCI state index, spatial relation state index, reference signal index, spatial filter index, and/or precoding index. In some cases, the spatial filter may be either UE-side or BS-side (e.g., gNB-side) one. The spatial filter may sometimes be referred to as spatial-domain filter.

In some implementations, the term "spatial relation information" can include at least one or more reference RSs. The one or more reference RSs may be used to represent "spatial relation" between targeted "RS or channel" and the one or more reference RSs. In some cases, the term "spatial relation" may refer to the same/quasi-co beam(s), same/quasi-co spatial parameter(s), and/or same/quasi-co spatial domain filter(s). In certain cases, the term "spatial relation" may refer to the beam, spatial parameter, and/or spatial domain filter.

In some cases, the term "QCL state" may include or be a part of one or more reference RSs and/or the corresponding QCL type parameters of the one or more reference RSs. The QCL type parameters may include at least one or a combination of: Doppler spread, Doppler shift, delay spread, average delay, average gain, and/or spatial parameter. The spatial parameter may refer to the spatial Rx parameter. In some cases, the term "TCI state" may include or correspond to "QCL state".

The QCL types can include at least 'QCL-TypeA,' 'QCL-TypeB,' 'QCL-TypeC,' and/or 'QCL-TypeD.' The 'QCL-TypeA' can include or correspond to doppler shift, doppler spread, average delay, and/or delay spread. The 'QCL-TypeB' can include or correspond to doppler shift, and/or doppler spread. The 'QCL-TypeC' can include or correspond to doppler shift, and/or average delay. The 'QCL-TypeD' can include or correspond to a spatial Rx parameter.

In certain cases, an RS may include at least one of CSI-RS, synchronization signal block (SSB) (e.g., sometimes referred to as SS/PBCH), DMRS, SRS, and/or physical random access channel (PRACH). Further, the RS may include at least a DL reference signal and/or UL reference signaling. In some cases, a DL RS may include at least CSI-RS, SSB, and/or DMRS (e.g., DL DMRS). In some cases, a UL RS may include at least SRS, DMRS (e.g., UL DMRS), and/or PRACH.

In some cases, the term "UL signal" can include, correspond to, or represent PRACH, PUCCH, PUSCH, UL DMRS, or SRS. The term "DL signal" can correspond to PDCCH, PDSCH, SSB, DL DMRS, or CSI-RS.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the embodiments described in this disclosure will be readily apparent to those skilled in the art, and the general principles defined herein can be applied to other embodiments without departing from the scope of this disclosure. The invention is defined by the appended claims.

## Claims

1. A method comprising:
receiving, by a User Equipment, UE, from a Base Station, BS, a message that includes an indication,
wherein the indication is to indicate a plurality of demodulation reference signal, DMRS, ports associated with an orthogonal cover code, OCC, having a length of 4 in one code division multiplex, CDM, group, mapping on a plurality of non-continuous resources,
wherein the plurality of non-continuous resources comprise:
two groups of resource elements comprised in the plurality of non-continuous resources, wherein the two groups of resource elements are non-continuous with respect to each other over one OFDM symbol, each of the two groups of resource elements comprising two resource elements; or
four resource elements comprised in the plurality of non-continuous resources, wherein the four resource elements are non-continuous with respect to each other over one OFDM symbol, and
wherein the plurality of DMRS ports in the one CDM group comprise 4 DMRS ports over 4 resource elements and over the one OFDM symbol.

2. The method of claim 1, comprising:
receiving, by the UE from the BS, a DMRS that is modulated according to the length of the OCC.

3. The method of claim 1, comprising:
transmitting, by the UE to the BS, the DMRS that is modulated according to the length of the OCC.

4. The method of claim 1, further comprising:
modulating, by the UE based on the indication, the plurality of DMRS ports according to the OCC having the length of 4, in the one CDM group; and
mapping, by the UE the modulated plurality of DMRS ports associated with the OCC in the one CDM group on the plurality of non-continuous resources, wherein the plurality of non-continuous resources comprises the two groups of resource elements that are non-continuous with respect to each other.

5. The method of claim 4, wherein resources in each of the two groups of resource elements are continuous with respect to each other, the resources comprising the two resource elements.

6. The method of claim 1, wherein the OCC, when having a length of 4, comprises at least one of:
[1,1,1,1];
[1,1,-1,-1];
[1,-1,1,-1]; or
[1,-1,-1,1].

7. The method of claim 1, wherein for DMRS type-1 over one orthogonal frequency division multiplexing, OFDM, symbol of the DMRS, a code division multiplex, CDM, group is mapped across at least two resource blocks, RBs.

8. The method of claim 7, wherein the at least two RBs include
at least two continuous physical RBs.

9. The method of claim 1, wherein for DMRS type-1 over one orthogonal frequency division multiplexing, OFDM, symbol of the DMRS, a number of scheduled resource blocks, RBs, for one continuous scheduling over frequency domain is even.

10. The method of claim 1, wherein the indication is conveyed to the UE by at least one of a radio resource control, RRC, signaling or a downlink control information, DCI, signaling.

11. The method of claim 10, the indication of the plurality of DMRS ports is conveyed by the DCI signaling, by
one bit on a field.

12. The method of claim 10, wherein the RRC signaling configures:
an enable of the DMRS ports to apply the OCC in the one CDM group mapping on the plurality of non-continuous resources.

13. The method of claim 1, wherein the plurality of DMRS ports in the one CDM group comprise the 4 DMRS ports over the 4 resource elements and over the one OFDM symbol based on a DMRS being over single orthogonal frequency division multiplexing, OFDM, symbol, and wherein the plurality of DMRS ports in the one CDM group comprise up to 8 DMRS ports over 8 REs based on a DMRS being over two continuous OFDM symbols.

14. A method comprising:
determining, by a Base Station, BS, an indication of a plurality of demodulation reference signal, DMRS, ports associated with an orthogonal cover code, OCC, having a length of 4 in one code division multiplex, CDM, group, mapping on a plurality of non-continuous resources; and
transmitting, by the BS to a User Equipment, UE, a message that includes the indication,
wherein the plurality of non-continuous resources comprise:
two groups of resource elements comprised in the plurality of non-continuous resources, wherein the two groups of resource elements are non-continuous with respect to each other over one OFDM symbol, each of the two groups of resource elements comprising two resource elements; or
four resource elements comprised in the plurality of non-continuous resources, wherein the four resource elements are non-continuous with respect to each other over one OFDM symbol, and
wherein the plurality of DMRS ports in the one CDM group comprise 4 DMRS ports over 4 resource elements and over the one OFDM symbol.

15. An apparatus comprising:
at least one processor and a transceiver configured to perform the method of any one of claims 1-14.

## Patentansprüche

1. Verfahren, aufweisend:
Empfangen, durch eine Benutzereinrichtung, UE, von einer Basisstation, BS, einer Nachricht, die eine Angabe einschließt,
wobei die Angabe dazu dient, mehrere Demodulationsreferenzsignal-, DMRS-, Ports anzugeben, die einem orthogonalen Cover-Code, OCC, zugeordnet sind, der über eine Länge von 4 in einer Codemultiplex-, CDM-, Gruppe verfügt, die auf mehrere nicht kontinuierliche Ressourcen abbildet,
wobei die mehreren nicht kontinuierlichen Ressourcen aufweisen:
zwei Gruppen von Ressourcenelementen, die in den mehreren nicht kontinuierlichen Ressourcen enthalten sind, wobei die zwei Gruppen von Ressourcenelementen in Bezug aufeinander über ein OFDM-Symbol nicht kontinuierlich sind, jede der zwei Gruppen von Ressourcenelementen aufweisend zwei Ressourcenelemente; oder
vier Ressourcenelemente, die in den mehreren nicht kontinuierlichen Ressourcen enthalten sind, wobei die vier Ressourcenelemente in Bezug aufeinander über ein OFDM-Symbol nicht kontinuierlich sind, und
wobei die mehreren DMRS-Ports in der einen CDM-Gruppe 4 DMRS-Ports über 4 Ressourcenelemente und über das eine OFDM-Symbol aufweisen.

2. Verfahren nach Anspruch 1, aufweisend:
Empfangen, durch die UE von der BS, eines DMRS, das gemäß der Länge des OCC moduliert ist.

3. Verfahren nach Anspruch 1, aufweisend:
Senden, durch die UE an die BS, des DMRS, das gemäß der Länge des OCC moduliert ist.

4. Verfahren nach Anspruch 1, ferner aufweisend:
Modulieren, durch die UE basierend auf der Angabe, der mehreren DMRS-Ports gemäß dem OCC, der über die Länge von 4 in der einen CDM-Gruppe verfügt; und
Abbilden, durch die UE, der modulierten mehreren DMRS-Ports, die dem OCC in der einen CDM-Gruppe zugeordnet sind, auf die mehreren nicht kontinuierlichen Ressourcen, wobei die mehreren nicht kontinuierlichen Ressourcen die zwei Gruppen von Ressourcenelementen aufweisen, die in Bezug aufeinander nicht kontinuierlich sind.

5. Verfahren nach Anspruch 4, wobei Ressourcen in jeder der zwei Gruppen von Ressourcenelementen in Bezug aufeinander kontinuierlich sind, die Ressourcen aufweisend die zwei Ressourcenelemente.

6. Verfahren nach Anspruch 1, wobei der OCC, wenn er über eine Länge von 4 verfügt, mindestens eines aufweist von:
[1,1,1,1];
[1,1,-1,-1];
[1,-1,1,-1]; oder
[1,-1,-1,1].

7. Verfahren nach Anspruch 1, wobei, für einen DMRS-Typ-1 über ein orthogonales Frequenzmultiplex-, OFDM-, Symbol des DMRS, eine Codemultiplex-, CDM-, Gruppe über mindestens zwei Ressourcenblöcke, RBs, abgebildet wird.

8. Verfahren nach Anspruch 7, wobei die mindestens zwei RBs
mindestens zwei kontinuierliche physikalische RBs einschließen.

9. Verfahren nach Anspruch 1, wobei, für den DMRS-Typ-1 über ein orthogonales Frequenzmultiplex-, OFDM-, Symbol des DMRS, eine Anzahl von geplanten Ressourcenblöcken, RBs, für eine kontinuierliche Planung über einen Frequenzbereich gerade ist.

10. Verfahren nach Anspruch 1, wobei die Angabe an die UE durch mindestens eine von einer Funkressourcensteuerungs-, RRC-, Signalisierung oder einer Downlink-Steuerinformations-, DCI-, Signalisierung übermittelt wird.

11. Verfahren nach Anspruch 10, wobei die Angabe der mehreren DMRS-Ports durch die DCI-Signalisierung übermittelt wird, durch ein Bit auf einem Feld.

12. Verfahren nach Anspruch 10, wobei die RRC-Signalisierung konfiguriert:
eine Aktivierung der DMRS-Ports, um den OCC in der einen CDM-Gruppe anzuwenden, die auf die mehreren nicht kontinuierlichen Ressourcen abbildet.

13. Verfahren nach Anspruch 1, wobei die mehreren DMRS-Ports in der einen CDM-Gruppe die 4 DMRS-Ports über die 4 Ressourcenelemente und über das eine OFDM-Symbol aufweisen, basierend auf einem DMRS, das über einem einzelnen orthogonalen Frequenzmultiplex-, OFDM-, Symbol liegt, und wobei die mehreren DMRS-Ports in der einen CDM-Gruppe bis zu 8 DMRS-Ports über 8 REs aufweisen, basierend auf einem DMRS, das über zwei kontinuierlichen OFDM-Symbolen liegt.

14. Verfahren, aufweisend:
Bestimmen, durch eine Basisstation, BS, einer Angabe mehrerer Demodulationsreferenzsignal-, DMRS-, Ports, die einem orthogonalen Cover-Code, OCC, zugeordnet sind, der über eine Länge von 4 in einer Codemultiplex-, CDM-, Gruppe, verfügt, die auf mehrere nicht kontinuierliche Ressourcen abbildet; und
Senden, durch die BS an eine Benutzereinrichtung, UE, einer Nachricht, die die Angabe einschließt,
wobei die mehreren nicht kontinuierlichen Ressourcen aufweisen:
zwei Gruppen von Ressourcenelementen, die in den mehreren nicht kontinuierlichen Ressourcen enthalten sind, wobei die zwei Gruppen von Ressourcenelementen in Bezug aufeinander über ein OFDM-Symbol nicht kontinuierlich sind, jede der zwei Gruppen von Ressourcenelementen aufweisend zwei Ressourcenelemente; oder
vier Ressourcenelemente, die in den mehreren nicht kontinuierlichen Ressourcen enthalten sind, wobei die vier Ressourcenelemente in Bezug aufeinander über ein OFDM-Symbol nicht kontinuierlich sind, und
wobei die mehreren DMRS-Ports in der einen CDM-Gruppe 4 DMRS-Ports über 4 Ressourcenelemente und über das eine OFDM-Symbol aufweisen.

15. Vorrichtung, aufweisend:
mindestens einen Prozessor und einen Sendeempfänger, die konfiguriert sind, um das Verfahren nach einem der Ansprüche 1 bis 14 durchzuführen.

## Revendications

1. Procédé comprenant :
la réception, par un équipement utilisateur, UE, en provenance d'une station de base, BS, d'un message qui comporte une indication,
dans lequel l'indication est destinée à indiquer une pluralité de ports de signal de référence de démodulation, DMRS, associés à un code de couverture orthogonal, OCC, ayant une longueur de 4 dans un groupe de multiplexage par répartition en code, CDM, se mappant sur une pluralité de ressources non continues,
dans lequel la pluralité de ressources non continues comprend :
deux groupes d'éléments de ressource compris dans la pluralité de ressources non continues, dans lequel les deux groupes d'éléments de ressource sont non continus l'un par rapport à l'autre sur un symbole OFDM, chacun des deux groupes d'éléments de ressource comprenant deux éléments de ressource ; ou
quatre éléments de ressource compris dans la pluralité de ressources non continues, dans lequel les quatre éléments de ressource sont non continus les uns par rapport aux autres sur un symbole OFDM, et
dans lequel la pluralité de ports DMRS dans le groupe CDM comprend 4 ports DMRS sur 4 éléments de ressource et sur le symbole OFDM.

2. Procédé selon la revendication 1, comprenant :
la réception, par l'UE en provenance de la BS, d'un DMRS qui est modulé selon la longueur de l'OCC.

3. Procédé selon la revendication 1, comprenant :
la transmission, par l'UE à la BS, du DMRS qui est modulé selon la longueur de l'OCC.

4. Procédé selon la revendication 1, comprenant en outre :
la modulation, par l'UE sur la base de l'indication, de la pluralité de ports DMRS selon l'OCC ayant la longueur de 4, dans le groupe CDM ; et
le mappage, par l'UE, de la pluralité modulée de ports DMRS associés à l'OCC dans le groupe CDM sur la pluralité de ressources non continues, dans lequel la pluralité de ressources non continues comprend les deux groupes d'éléments de ressource qui sont non continus l'un par rapport à l'autre.

5. Procédé selon la revendication 4, dans lequel des ressources dans chacun des deux groupes d'éléments de ressource sont continues les unes par rapport aux autres, les ressources comprenant les deux éléments de ressource.

6. Procédé selon la revendication 1, dans lequel l'OCC, lorsqu'il a une longueur de 4, comprend au moins l'un parmi :
[1, 1, 1, 1] ;
[1, 1, -1, -1] ;
[1, -1, 1, -1] ; ou
[1, -1, -1, 1].

7. Procédé selon la revendication 1, dans lequel, pour un DMRS de type 1 sur un symbole de multiplexage par répartition orthogonale de la fréquence, OFDM, du DMRS, un groupe de multiplexage par répartition en code, CDM, est mappé sur au moins deux blocs de ressources, RB.

8. Procédé selon la revendication 7, dans lequel les au moins deux RB comportent au moins deux RB physiques continus.

9. Procédé selon la revendication 1, dans lequel, pour un DMRS de type 1 sur un symbole de multiplexage par répartition orthogonale de la fréquence, OFDM, du DMRS, un nombre de blocs de ressources, RB, planifiés pour une planification continue sur le domaine fréquentiel est pair.

10. Procédé selon la revendication 1, dans lequel l'indication est transmise à l'UE par au moins l'une parmi une signalisation de commande de ressources radio, RRC, ou une signalisation d'informations de commande de liaison descendante, DCI.

11. Procédé selon la revendication 10, l'indication de la pluralité de ports DMRS est transmise par la signalisation DCI, par un bit sur un champ.

12. Procédé selon la revendication 10, dans lequel la signalisation RRC configure :
une activation des ports DMRS pour appliquer l'OCC dans le groupe CDM mappé sur la pluralité de ressources non continues.

13. Procédé selon la revendication 1, dans lequel la pluralité de ports DMRS dans le groupe CDM comprend les 4 ports DMRS sur les 4 éléments de ressource et sur le symbole OFDM sur la base d'un DMRS qui est sur un unique symbole de multiplexage par répartition orthogonale de la fréquence, OFDM, et dans lequel la pluralité de ports DMRS dans le groupe CDM comprend jusqu'à 8 ports DMRS sur 8 RE sur la base d'un DMRS qui est sur deux symboles OFDM continus.

14. Procédé comprenant :
la détermination, par une station de base, BS, d'une indication d'une pluralité de ports de signal de référence de démodulation, DMRS, associés à un code de couverture orthogonal, OCC, ayant une longueur de 4 dans un groupe de multiplexage par répartition en code, CDM, mappé sur une pluralité de ressources non continues ; et
la transmission, par la BS à un équipement utilisateur, UE, d'un message qui comporte l'indication,
dans lequel la pluralité de ressources non continues comprend :
deux groupes d'éléments de ressource compris dans la pluralité de ressources non continues, dans lequel les deux groupes d'éléments de ressource sont non continus l'un par rapport à l'autre sur un symbole OFDM, chacun des deux groupes d'éléments de ressource comprenant deux éléments de ressource ; ou
quatre éléments de ressource compris dans la pluralité de ressources non continues, dans lequel les quatre éléments de ressource sont non continus les uns par rapport aux autres sur un symbole OFDM, et
dans lequel la pluralité de ports DMRS dans le groupe CDM comprend 4 ports DMRS sur 4 éléments de ressource et sur le symbole OFDM.

15. Appareil comprenant :
au moins un processeur et un émetteur-récepteur configurés pour réaliser le procédé selon l'une quelconque des revendications 1 à 14.
